# EUROPÄISCHE PATENTSCHRIFT

(11) **EP 2 101 972 B1**
(45) Veröffentlichungstag und Bekanntmachung des Hinweises auf die Patenterteilung: **15.08.2012**
(21) Anmeldenummer: 07845615.9
(22) Anmeldetag: 05.12.2007
(51) Int. Cl.: B29B 9/16, B29B 13/02, B29B 13/06, C08G 63/88, C08G 64/40

(54) **VERFAHREN ZUR HERSTELLUNG HOMOGEN KRISTALLISIERTER POLYKONDENSATGRANULATE**
METHOD FOR PRODUCING HOMOGENEOUSLY CRYSTALLIZED POLYCONDENSATE PELLETS
PROCÉDÉ DE PRODUCTION DE GRANULÉS DE POLYCONDENSAT CRISTALLISÉS HOMOGÈNES

(30) Priorität: 11.12.2006 DE 102006058642
(43) Veröffentlichungstag der Anmeldung: 23.09.2009
(73) Patentinhaber: Bühler AG, 9240 Uzwil (CH)
(72) Erfinder: EUSEBIO, Fernando, 8592 Uttwil (CH); CULBERT, Brent Allan, 9500 Wil (CH); CHRISTEL, Andreas, 9524 Zuzwil (CH); LOCKER, Peter, 63762 Grossostheim (DE)
(74) Vertreter: Hepp Wenger Ryffel AG
(86) Internationale Anmeldenummer: PCT/CH2007/000612
(87) Internationale Veröffentlichungsnummer: WO 2008/071023

(56) Entgegenhaltungen:
- EP-A- 0 379 684
- EP-A- 0 597 155
- EP-A- 0 864 409

## Beschreibung

Die Erfindung bezieht sich auf ein Verfahren zur kontinuierlichen Herstellung eines teilkristallinen Polykondensatgranulates gemäss dem Oberbegriff des Anspruchs 1.

Im Stand der Technik sind Verfahren bekannt, die es erlauben aus geschmolzenen kristallisierbaren Polykondensaten durch Abkühlung, Schneiden und thermische Behandlung teilkristalline Granulate herzustellen. Üblicherweise wird das Polykondensat auf eine Temperatur unter dessen Glasübergangstemperatur abgekühlt und zur Kristallisation wieder aufgeheizt. Alternativ kann das Abkühlen auch auf eine geeignete Kristallisationstemperatur erfolgen, wodurch sich anschliessend eine Kristallisation ohne äussere Wärmezufuhr erreichen lässt.

(DE 103 49 016, Bruckmann; DE 10 2004 015 515, Otto et al.). Diese Verfahren haben aber den Nachteil, dass sie Anforderungen an eine flexibel einstellbare und homogene Austrittsqualität, bezüglich Temperatur und Kristallisationsgrad, nicht erfüllen können. Weiterhin nachteilig ist, dass sich im Anfangsbereich der Kristallisationszone häufig Agglomerate bilden, die sich nicht in jedem Fall vollständig auflösen.

Eine bessere Temperaturkontrolle wird erreicht, wenn die Kristallisation der noch heissen Granulate unter zusätzlicher Zufuhr eines heissen Behandlungsgases im Wirbelbett erfolgt, wie dies in US 3'544'525 (Balint et al.) oder WO 01/12698 (Borer et al.) beschrieben ist. Die Kontrolle und Homogenität der Kristallisation sind weiterhin ungenügend.

WO 01/12698 (Borer et al.) offenbart ein Verfahren gemäβ dem Oberbegriff des Anspruches 1 und schlägt weiterhin vor, eine Kombination von Sprudelbett und Fliessbett zu verwenden, wodurch sich eine bessere Kontrolle und Homogenität der Kristallisation erreichen lässt. Hier besteht dann aber der Nachteil, dass grosse Mengen an Behandlungsgas verwendet werden müssen, um die Polykondensatgranulate über eine lange Behandlungsstrecke hinweg verwirbeln zu können.

In der EP-A 0 379 684 wird die Kristallisation von zu starkem Kleben neigenden Polyestern in einem kontinuierlichen, kostengünstigen Prozess unter Wirbelschichtbedingungen durchgeführt, indem zwei hintereinander geschaltete Wirbelbetten verwendet werden, durch welche das Polyestermaterial geführt wird. Die hintereinander geschalteten Wirbelschichten haben unterschiedliche Charakteristiken. Dies führt überraschenderweise zu einem einheitlichen Kristallinitätsgrad, obwohl nach wie vor ein verbreitertes Verweilzeitspektrum des Polyestermaterials im Behandlungsraum vorliegt.

Demgegenüber ist es die Aufgabe der vorliegenden Erfindung ein Verfahren zur Verfügung zu stellen, mit dem sich homogen kristallisierte Polykondensatgranulate mit kontrollierter Temperatur und ohne Agglomeratbildung auf einfache und energetisch günstige Weise herstellen lassen.

Die Aufgabe wird gemäss Anspruch 1 gelöst, indem eine Polykondensatschmelze hergestellt, in einem flüssigen Kühlmedium zu Granulaten geformt und abgekühlt wird, woraufhin die Granulate in dem flüssigen Kühlmedium zu einer Trennvorrichtung gefördert und vom flüssigen Kühlmedium getrennt werden. Anschliessend werden die Granulate in einer Kristallisationsvorrichtung mit einem engen Verweilzeitspektrum im Gegenstrom mit einem Behandlungsgas, das die Granulate über deren Lockerungsgeschwindigkeit durchströmt, behandelt.

Gemäss einer bevorzugten Ausführung weist das Behandlungsgas eine Temperatur auf, die über der mittleren Granulattemperatur liegt, woraus sich der Vorteil ergibt, dass sich die Polykondensatgranulate auf eine konstante und definierte Austrittstemperatur einstellen lassen.

Geeignete Polykondensate umfassen kristallisierbare, thermoplastische Polykondensate, wie zum Beispiel Polyamide, Polyester, Polycarbonate, Polyhydroxyalkanoate, Polylaktide oder deren Copolymere, die durch eine Polykondensationsreaktion unter Abspaltung eines niedermolekularen Reaktionsproduktes gewonnen wird. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im wesentlichen ist das so gewonnene Polykondensat linear, wobei eine geringe Anzahl an Verzweigungen entstehen kann.

Bei Polyamid handelt es sich dabei um ein Polymer, das durch Polykondensation aus seinen Monomeren, entweder einer Diamin-Komponente und einer Dikarbonsäure-Komponente oder einem bifunktionellen Monomer mit einer Amin- und einer Karbonsäureendgruppe, gewonnen wird.

Bei Polyester handelt es sich hierbei um ein Polymer, das durch Polykondensation aus seinen Monomeren, einer Diol-Komponente und einer Dikarbonsäure-Komponente, gewonnen wird. Verschiedene, meist lineare oder zyklische Diol-Komponenten kommen zum Einsatz. Ebenso können verschiedene, meist aromatische Dikarbonsäure-Komponenten zum Einsatz kommen. Anstelle der Dikarbonsäure kann auch ihr entsprechender Dimethylester eingesetzt werden.

Typische Beispiele der Polyester sind Polyethylenterephthalat (PET), Polybutylenterephthalat (PBT) und Polyethylennaphthalat (PEN) die entweder als Homopolymer oder als Copolymere zum Einsatz kommen.

Das Polyethylenterephthalat wird aus seinen Monomeren, einer Diol-Komponente und einer Dikarbonsäure-Komponente, gewonnen, wobei die Diol-Komponenten als Hauptmonomer aus Ethylenglykol (1,2 Ethandiol) und die Dikarbonsäure-Komponenten als Hauptmonomer aus Terephthalsäure besteht. Als Comonomere kommen weitere lineare, zyklische oder aromatische Diol- und Dikarbonsäureverbindungen in Frage. Typische Comonomere sind Diethylenglykol (DEG), Isophthalsäure (IPA) oder 1,4-Bishydroxymethyl-cyclohexan (CHDM).

Bei Polyhydroxyalkanoaten handelt es sich um Polymere, die durch Polykondensation aus seinen Monomeren, mit der allgemeinen Formel HO-CH(R)-(CH2)ₙ-COOH gewonnen werden, wobei R üblicherweise einen aliphatischen Kohlenwasserstoff mit 1 bis 15 Kohlenstoffatomen darstellt und n = 1 bis 10, üblicherweise 1 bis 3 beträgt. Ein typisches Beispiel ist Polyhydroxybutyrat mit R = CH3 und n = 1.

Bei den Polylaktiden (bekannt als Polylactic acid, PLA) handelt es sich um Polymere, die direkt unter Wasserabspaltung aus Milchsäure oder durch Ringöffnungspolymerisation aus seinen zyklischen Dimeren (Lactiden) gewonnen werden können.

Bei dem Polykondensat kann es sich um ein Neumaterial oder um ein Rezyklat handeln. Als Rezyklate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polymeren können Additive zugegeben werden. Als Additive eignen sich zum Beispiel Katalysatoren, Farbstoffe und Pigmente, UV-Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere- oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Das Herstellen einer Polymerschmelze erfolgt mittels im Stand der Technik bekannter Apparaten oder Reaktoren. Grundsätzlich kommen Polymerisationsreaktoren in Frage, in denen Polymere in flüssiger Phase hergestellt werden, wie zum Beispiel Rührkessel, Käfigreaktoren oder Scheibenreaktoren, oder aber Apparaturen, in denen zuvor hergestellte Polymere aufgeschmolzen werden, wie zum Beispiel Extruder oder Kneter. Die Polymerschmelzeherstellung kann kontinuierlich oder batchweise erfolgen. Für die weitere Verarbeitung sind aber kontinuierliche Prozesse bevorzugt.

In einer Austrittsvorrichtung, insbesondere einer Düse oder Düsenplatte, werden aus der Polykondensatschmelze einzelne Polykondensatstränge geformt. Zur Herstellung von Granulaten aus den Polykondensatsträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polykondensatstränge, die aus den Schmelzekanälen austreten, verfestigt und in eine Vielzahl an einzelnen Granulaten aufgetrennt, wobei das Auftrennen vor oder nach dem Verfestigen erfolgen kann.

Trotz der Verwendung des Begriffs "Wasser" in der Bezeichnung der Granulationseinrichtungen können auch andere flüssige Medien verwendet werden.

Das Auftrennen erfolgt zum Beispiel durch eine selbstständige Tropfenbildung, durch den Einsatz eines flüssigen Schermediums oder durch ein mechanisches Trennen, insbesondere Schneiden.

Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke. Das Verfestigen der Polykondensatschmelze erfolgt durch Kühlen mit Hilfe eines oder mehrere Kühlfluide, wobei es sich um gasförmige (z. B. Luft, Stickstoff oder CO2) oder flüssige (z. B. Wasser oder Ethylenglykol) Kühlmedien oder eine Kombination daraus handeln kann. Erfindungsgemäss wird zumindest ein flüssiges Kühlmedium verwendet. Das Polykondensat, insbesondere als Polykondensatstränge oder als Tropfen, kann zum Beispiel vor dem Eintritt in das flüssige Kühlmedium eine Strecke durchfliessen, die ein Prozessgas, insbesondere Luft oder Wassernebel, enthält.

Die mittlere Granulatgrösse soll zwischen 0.1 mm und 10 mm, bevorzugterweise zwi- schen 0.5 mm und 3 mm und insbesondere zwischen 0.85 mm und 2.5 mm liegen.

Die Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0 541 674 (Yau) vorgeschlagen ist, aufweisen.

Die Abkühlung der Polykondensatgranulate kann auf eine durchschnittliche Temperatur erfolgen, die unterhalb des Kristallisationstemperaturbereiches des Polykondensates liegt. Bevorzugterweise erfolgt die Abkühlung der Polykondensatgranulate aber auf eine durchschnittliche Temperatur, die innerhalb des Kristallisationstemperaturbereiches des Polykondensates liegt. Dazu ist es möglich, die Temperatur des Kühlmediums anzuheben und/oder die Verweilzeit im Kühlmedium entsprechend kurz zu wählen. Gleichzeitig mit dem Abkühlen können die Polykondensatgranulate zu einem weiteren Prozessschritt gefördert werden.

Der geeignete Kristallisationstemperaturbereich wird ersichtlich, wenn man die Kristallisationshalbwertszeit (t½) als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit erreicht. Da sehr kurze Kristallisationshalbwertszeiten (t½) nur schwer bestimmbar sind, wird als Minimalwert t½ = 1 Minute eingesetzt. Bei Polyethylenterephthalat liegt der Temperaturbereich zwischen 110 und 220°C.

Die Kristallisationshalbwertszeit wird dazu mittels isothermer Kristallisation im DSC bestimmt, wobei t½ der Zeit entspricht, die bei der gegebenen Temperatur nach der Induktionszeit benötigt wird, um 50% der erreichbaren Kristallinität zu erreichen.

Nach dem Abkühlen wird das Kühlmedium von den Granulaten getrennt. Optional erfolgt eine weitere Behandlung (Konditionierung) der Granulate in einem flüssigen Medium, wofür direkt das Kühlmedium oder eine andere Flüssigkeit verwendet werden kann.

Das Trennen der Granulate von einem flüssigen Kühlmedium erfolgt mittels im Stand der Technik bekannter Trennvorrichtungen. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aber aktive Trennvorrichtungen zumindest für einen Teil der Trennung verwendet, wobei die Trennung zum Beispiel aufgrund einer Gasdurchströmung, einer Zentrifugalkraft oder eines Aufpralls erfolgt. Solche Vorrichtungen sind zum Beispiel als Absaugvorrichtungen, Pralltrockner oder Zentrifugaltrockner bekannt. Ebenso kann ein Teil der Trennung mittels eines ungesättigten, optional erwärmten, Gasstroms durch Verdampfen des Kühlmediums erfolgen.

Nach dem Abtrennen der Polykondensatgranulate vom flüssigen Kühlmedium kann ein direkter Übertrag in den nachfolgenden Behandlungsraum zur Kristallisation erfolgen. Optional können die Polykondensatgranulate aber auch durch eine Förderstrecke geleitet werden, wobei eine ständige Relativbewegung zwischen den einzelnen Granulaten gewährleistet sein muss. Die Relativbewegung lässt sich zum Beispiel erreichen durch eine hohe Fliessgeschwindigkeit in einer Rohrleitung (grösser als 0.3 m/min, insbesondere grösser als 1 m/min), durch eine Umströmung mit einem Fördergas, durch mechanische Bewegung, zum Beispiel mittels Rührwerk oder Förderschnecke, oder durch Erzeugung einer Schwingung oder Vibration.

Erfindungsgemäss durchfliessen die Polykondensatgranulate den Behandlungsraum zur Kristallisation im Wesentlichen von oben nach unten, währen der Behandlungsraum von unten nach oben von einem Behandlungsgas durchströmt wird. Das Behandlungsgas weist dazu eine Leerrohrgeschwindigkeit auf, die über dem Lockerungspunkt der Polykondensatgranulate im Behandlungsraum liegt.

Die Polykondensatgranulate durchfliessen den Behandlungsraum mit einem engen Verweilzeitspektrum.

Um bei den gegebenen Bedingungen ein enges Verweilzeitspektrum zu gewährleisten, muss zumindest in Teilen des Behandlungsraumes eine starke Verwirbelung vermieden werden. Dies lässt sich erreichen, indem eine Blasenbildung im Behandlungsraum durch den Einsatz von Stauelementschichten verhindert wird, wie dies in der Anmeldung der Bühler AG "Vorrichtung und Verfahren zur thermischen Behandlung von Schüttgutmaterialien" (eingereicht am 8.12.2006) vorgeschlagen wird, oder indem bei gleichzeitig hoher Sinkgeschwindigkeit der Polykondensatgranulate die Gasgeschwindigkeit des Behandlungsgases nur geringfügig über dem Lockerungspunkt der Polykondensatgranulate eingestellt wird.

Der Behandlungsraum zur Kristallisation wird von einem Gehäuse umgeben. Der horizontale Querschnitt des Behandlungsraumes kann eine beliebige Form aufweisen, ist bevorzugterweise aber rund oder rechteckig. Der Behandlungsraum ist im Wesentlichen vertikal angeordnet, so dass das Granulat die Vorrichtung von oben nach unten durchfliessen kann. Wichtig ist dabei, dass ein gleichmässiger Produktfluss erreicht werden kann. Der Behandlungsraum wird seitlich durch einen Mantel begrenzt. Die Mantelwand kann dabei aus zylindrischen, konischen oder aus einer Kombination aus konischen und zylindrischen Segmenten bestehen, wodurch sich die Gasgeschwindigkeitsverteilung über die Höhe der Vorrichtung beeinflussen lässt. Eine Aufweitung im Deckenbereich erlaubt dabei eine Reduktion der Gasgeschwindigkeit, was den Austrag von Granulat verhindert.

Eine Verengung im Deckenbereich erlaubt eine Erhöhung der Gasgeschwindigkeit, was zu einer stärkeren Verwirbelung führt, wodurch sich allfällige Verklebungen verhindern lassen.

Eine besondere Ausführung sieht einen wenigstens annähernd rotationssymmetrischen Gehäusemantel vor, was fertigungstechnische Vorteile, sowie Vorteile für einen regelmässigen Produktfluss ergibt.

Im Innern des Behandlungsraumes kann ein Verdrängerkörper angeordnet sein, der nicht vom Granulat durchflossen wird und somit den Behandlungsraum verkleinert. Solche Verdrängerkörper können zum Beispiel zur Durchführung von Behandlungsgas, zur Anpassung der freien Querschnittsfläche oder zur Verbesserung des Granulatflusses eingesetzt werden.

Zumindest eine Einfüllöffnung mündet in den Deckenbereich des Behandlungsraumes und ermöglicht das Einführen des zu behandelnden Granulats in den Behandlungsraum. Bei der Einfüllöffnung kann es sich zum Beispiel um eine Öffnung im Gehäuse oder um den Austritt aus einem Rohr, das in das Gehäuse geführt wird, handeln. Die Einfüllöffnung kann in mehrere Segmente unterteilt sein, was eine Verteilung der Granulate im Behandlungsraum erlaubt.

Zumindest eine Austragsöffnung mündet in den unteren Teil des Behandlungsraumes, durch die behandeltes Granulat aus dem Behandlungsraum ausgetragen werden kann. Bei der Austragsöffnung kann es sich zum Beispiel um eine Öffnung im Gehäuse oder um den Eintritt in ein Rohr, das aus dem Gehäuse heraus geführt wird, handeln. Üblicherweise wird das Granulat durch einen konischen Bereich der Austragsöffnung zugeführt. Der Winkel des Auslaufkonus beträgt zur Horizontalen bevorzugterweise 50 - 80°, wenn das Granulat im Austragskonus nicht fluidisiert oder vibriert wird, und 15 - 60°, insbesondere 30 - 50°, wenn das Granulat im Austragskonus fluidisiert oder vibriert wird.

Alternativ kann das Granulat auch mittels einer mechanischen Austragsvorrichtung, wie zum Beispiel einer Schnecke, der Austragsöffnung zugeführt werden. Unterhalb der Austragsöffnung kann sich ein Sperrelement, wie zum Beispiel eine Zellradschleuse, eine horizontal angeordneten Austragswalze oder ein automatischer Schieber befinden, mit dessen Hilfe der Granulatabfluss aus dem Behandlungsraum geregelt wird. Als Regelgrösse kann dabei zum Beispiel die Füllhöhe des Granulates im Behandlungsraum oder das Gewicht der Granulate in der Vorrichtung dienen.

Im Bodenbereich des Behandlungsraumes befindet sich zumindest eine Zufuhreinrichtung für ein Behandlungsgas. Die Zufuhreinrichtung weist zumindest eine Eintrittsöffnung auf, durch die Behandlungsgas in den Behandlungsraum strömt.

Die Zuführeinrichtung für ein Behandlungsgas kann Vorrichtungen, wie zum Beispiel nach unten offene Kegel oder Dachreihen sowie Leitungen oder Bleche mit Austrittsbohrungen, umfassen, solange eine ausreichend gleichmässige Verteilung des Behandlungsgases erfolgt. Eine besondere Ausführung sieht vor, dass der Behandlungsraum nach unten durch eine zumindest teilweise gasdurchlässige Absperreinrichtung, insbesondere ein Lochblech mit einer Vielzahl an Eintrittsöffnungen, begrenzt wird, die von Behandlungsgas zumindest stellenweise, nicht aber von den Granulaten durchströmt werden kann. Dazu sind die Öffnungen kleiner als der Durchmesser der Granulate. Die Durchlassfläche weist bevorzugterweise zwischen 1% und 30% auf. Bevorzugt sind Öffnungen zwischen 20 und 90%, insbesondere zwischen 30 und 80% des Durchmessers der Granulate. Die Anzahl, Grösse und Anordnung der Öffnungen kann dabei gleichmässig oder ungleichmässig sein. Die Absperreinrichtung ist konisch oder horizontal angeordnet.

Unterhalb der Absperreinrichtung kann sich ein Verteilerraum befinden, durch den Behandlungsgas zur Absperrvorrichtung geführt wird. In diesen Verteilerraum mündet zumindest eine Zufuhröffnung für Behandlungsgas. Weiterhin können Vorrichtungen zur Verteilung des Behandlungsgases, wie Staubleche, Ventile oder Klappen, wie auch getrennte Kanäle zur individuellen Behandlungsgaszufuhr angeordnet sein.

Alternativ kann der Behandlungsraum nach unten durch eine nicht gasdurchlässige Absperreinrichtung begrenzt sein. In diesem Fall kann es sich bei der zumindest einen Zufuhreinrichtung für ein Behandlungsgas, um eine Öffnung im Gehäuse, um den Austritt aus einem Rohr oder mehreren Rohren, die in das Gehäuse geführt werden, oder um ein einzelnes Dach oder eine Dachreihe, die entweder mit Löchern versehen oder nach unten offen sind, handeln. Dabei kann ein allfälliger Verdrängerkörper zur Gaszufuhr verwendet werden.

Eine besondere Ausführung der vorliegenden Erfindung sieht vor, dass zusätzlich zur zumindest einen Zufuhreinrichtung für Behandlungsgas im Bodenbereich des Behandlungsraumes zumindest eine weitere Zufuhreinrichtung für Behandlungsgas in den Behandlungsraum mündet, wodurch sich eine mehrstufige Wärmezufuhr, sowie ein mehrstufiges Gasgeschwindigkeitsprofil erreichen lässt.

Im Deckenbereich des Behandlungsraumes befindet sich zumindest eine Wegführeinrichtung für das Behandlungsgas. Bei der Wegführeinrichtung kann es sich zum Beispiel um eine Öffnung im Gehäuse oder um den Eintritt in ein Rohr, das aus dem Gehäuse heraus geführt wird, handeln. Die Wegführeinrichtung kann sich dabei im Mantel oder der Decke des Behandlungsraumes befinden.

In oder unterhalb der Wegführeinrichtung können sich Vorrichtungen befinden, die den Durchtritt von Behandlungsgas erlauben, den Durchtritt von Granulaten aber behindern. Dies kann zum Beispiel durch einen gebogenen oder umgelenkten Durchflusskanal oder mit Hilfe von ablenkenden Einbauten, wie zum Beispiel einem Zick-Zack-Abscheider, erfolgen. Zwischen der Wegführeinrichtung und Zufuhreinrichtung für das Behandlungsgas kann ein geschlossener oder teilweise geschlossener Kreislauf bestehen.

Bevorzugterweise wird das Behandlungsgas mit einer Temperatur in den Behandlungsraum geführt, die über der mittleren Granulattemperatur der Polykondensatgranulate beim Eintritt in den Behandlungsraum liegt. Das Behandlungsgas wird dazu zumindest teilweise im Kreislauf geführt, wobei jeweils eine geringe Menge an Austauschgas zuund weggeführt wird. Im Kreislauf können sich weiter Einrichtungen, wie zum Beispiel Verdichtungseinrichtungen (z. B. Ventilatoren, Gebläse oder Kompressoren), Wärmetauscher oder Reinigungseinrichtungen (z. B. Filter, Zyklone, Wäscher oder katalytische Verbrennungseinrichtungen), befinden. Da ein Grossteil der Verdichtungsenergie als Wärme in den Gasstrom übergeht, kann die erhöhte Behandlungsgastemperatur auch mit wenig zusätzlicher Erhitzerleistung aufrecht erhalten werden. Verändert sich jedoch die Eintrittstemperatur der Polykondensatgranulate, so kann dies mittels der zusätzlichen Erhitzerleistung ausgeglichen werden.

Eine hohe Sinkgeschwindigkeit der Polykondensatgranulate im Behandlungsraum verhindert eine Kanalbildung, durch die grosse Mengen an Behandlungsgas mit nur geringem Wärmeaustausch zwischen Gas und Granulat die Granulatschüttung durchströmen kann. Ausreichende Sinkgeschwindigkeiten sind grösser als 0.05 m/min, insbesondere grösser als 0.15 m/min. Üblicherweise soll die Sinkgeschwindigkeit unter 5 m/min, insbesondere unter 2 m/min, bleiben, da sich sonst sehr geringe Behandlungszeiten oder sehr hohe Behandlungsräume ergeben.

Ein ausreichend enges Verweilzeitspektrum liegt dann vor, wenn ein Verweilzeitspektrum eine anfängliche Charakteristik aufweist, die besser ist als diejenige einer Rührkesselkaskade aus drei oder mehr, insbesondere vier oder mehr, Rührkessel. Die anfängliche Charakteristik beschreibt dabei das Spektrum vom Zeitpunkt null bis zur mittleren Verweilzeit. Damit ist gewährleistet, dass zumindest 95%, insbesondere zumindest 97%, des Polykondensatgranulates im Behandlungsraum eine minimale Verweilzeit von mehr als 20% der mittleren Verweilzeit aufweisen.

Die mittlere Verweilzeit ergibt sich aufgrund des Granulatdurchsatzes und des Volumens des Behandlungsraumes. Das Minimum der mittleren Verweilzeit ist erreicht, wenn im Prozess Agglomeratbildung auftritt. Das Maximum der mittleren Verweilzeit ergibt sich aus einer maximal zulässigen Höhe des Behandlungsraumes, wobei diese durch die Zufuhr des Behandlungsgases gegeben ist. Zweckmässig sind mittlere Verweilzeiten von 0.2 bis 60 Minuten, wobei zum Beispiel für die Behandlung von Polyethylenterephthalat mit einem Comonomergehalt von weniger als 6 mol% mittlere Verweilzeiten von 1 -15 Minuten, insbesondere 2 bis 8 Minuten ausreichen.

Als Lockerungspunkt wird die Strömungsgeschwindigkeit bezeichnet, bei der sich die Schüttung im losesten Zustand befindet. Die Bestimmung des Lockerungspunktes aus einer Messung eines Druckverlustverlaufs ist im VDI Wärmeatlas 5. Auflage 1988, im Kapitel Lf, Bild 4 dargestellt. Eine näherungsweise Berechnung kann aus "Wärme und Stoffübertragung in der Wirbelschicht; H. Martin; Chem. Ing. Tech 52 (1980) Nr 3, S199 - 209" entnommen werden. Für die Porosität (P) wird eine Berechnung aus der Partikelgeometrie angewandt, wobei für

| | |
|---|---|
| P | = (1/14/Os)^{Λ}(1/3) und |
| Os | = Oberfläche der Kugel gleichen Volumens / Partikeloberfläche gilt. |

Für nicht kugelförmige Schüttgutpartikel kann der Durchmesser der volumengleichen Kugel eingesetzt werden.

Alternativ lässt sich die Porosität auch aus dem Schüttgewicht im Lockerungspunkt und der Produktdichte berechnen P = 1- Schüttdichte/Produktdichte.

Treten starken Abweichungen der Porositätswerte nach den beiden Berechnungsarten auf, so muss auf jeden Fall eine Messung durchgeführt werden.

Bei Granulaten mit einem mittleren Durchmesser von 1.4 bis 5 mm und einer Temperatur zwischen 0°C und 300°C wird der Lockerungspunkt bei einer Leerrohrgeschwindigkeit von ca. 0.6 bis 2 m/s erreicht.

Der mittlere Granulatdurchmesser entspricht dabei dem durchschnittlichen Durchmesser der volumengleichen Kugeln der Granulate.

Die Leerrohrgeschwindigkeit entspricht dabei der Gasgeschwindigkeit im ungefüllten Behandlungsraum und berechnet sich aus der Gasmenge pro Zeit geteilt durch den Querschnitt des Behandlungsraumes.

Weitere, Vorteile, Merkmale und Anwendungsmöglichkeiten der Erfindung ergeben sich aus der nun folgenden Beschreibung zweier Ausführungsformen der Erfindung anhand der Zeichnung, wobei:
- Fig. 1: eine erste Ausführung der vorliegenden Erfindung zeigt; und
- Fig. 2: eine zweite Ausführung der vorliegenden Erfindung zeigt.

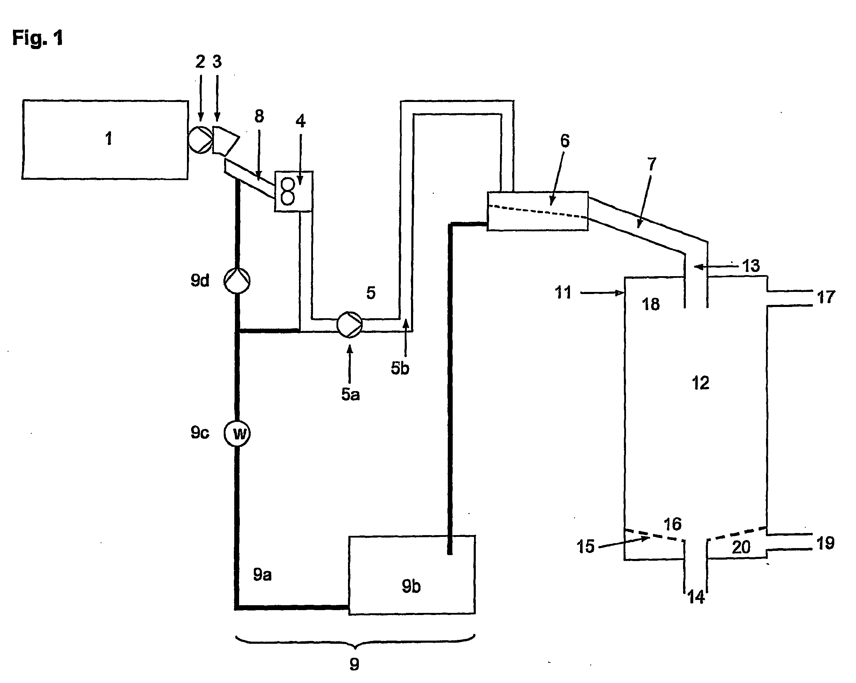

Figur 1 zeigt eine Ausführung der vorliegenden Erfindung, wobei Polykondensatmaterial mittels einer Schmelzepumpe (2) und optional einem Schmelzefilter (nicht gezeigt) aus einem Schmelzereaktor (1) ausgetragen und durch eine Düse (3) in Strangform gepresst wird. Die Polykondensatstränge werden auf einer Kühlvorrichtung (8) gekühlt und mittels eines Granulators (4) in Granulate geschnitten. Nach dem Granulator (4) fliessen die Granulate durch eine Förderstrecke (5) zu einem Granulattrockner (6). In der För derleitung (5b) können optional eine Pumpe (5a), Verzweigungsstücke, wie Rohrweichen, Agglomeratabscheider oder Zudosierungsvorrichtungen für alternative Kühlund/oder Fördermedien angeordnet sein. Abgetrenntes Kühlmedium wird in einem Kreislaufsystem (9) gefördert, das hier aus Rohrleitungen (9a), zumindest einem Tank (9b), zumindest einem Wärmetauscher (9c) und zumindest einer Pumpe (9d) besteht, wodurch ein gezieltes Auftreffen von temperiertem Kühlmedium auf die Polykondensatstränge gewährleistet ist.

Nach dem Abtrennen des Kühlmediums gelangen die Granulate über eine weitere Förderstrecke (7) und die Einfüllöffnung für Granulate (13) im Deckenbereich (18) in den Behandlungsraum (12). Dort wird das Granulat im Gegenstrom mit einem Behandlungsgas behandelt, wobei das Behandlungsgas durch eine Zuführöffnung (19) in einen Verteilerraum (20) gelangt und durch eine Zuführeinrichtung für Behandlungsgas (15), hier ein Lochblech, in den Bodenbereich (16) des Behandlungsraums (12) geführt wird und im Deckenbereich (18) durch eine Wegführeinrichtung für Behandlungsgas (17) wieder aus dem Behandlungsraum (12) geführt wird.

Durch die Einstellung der Gasmenge über den Lockerungspunkt der Granulatschüttung durchfliesst das Granulat den Behandlungsraum (12) im Wesentlichen in einer Kolbenströmung als gelockertes Festbett und verlässt den Behandlungsraum (12) durch die Austragsöffnung (14), wobei die Austragsmenge durch eine Absperrvorrichtung (nicht gezeigt), wie einer Zellradschleuse oder eines pneumatischen Schiebers, geregelt wird.

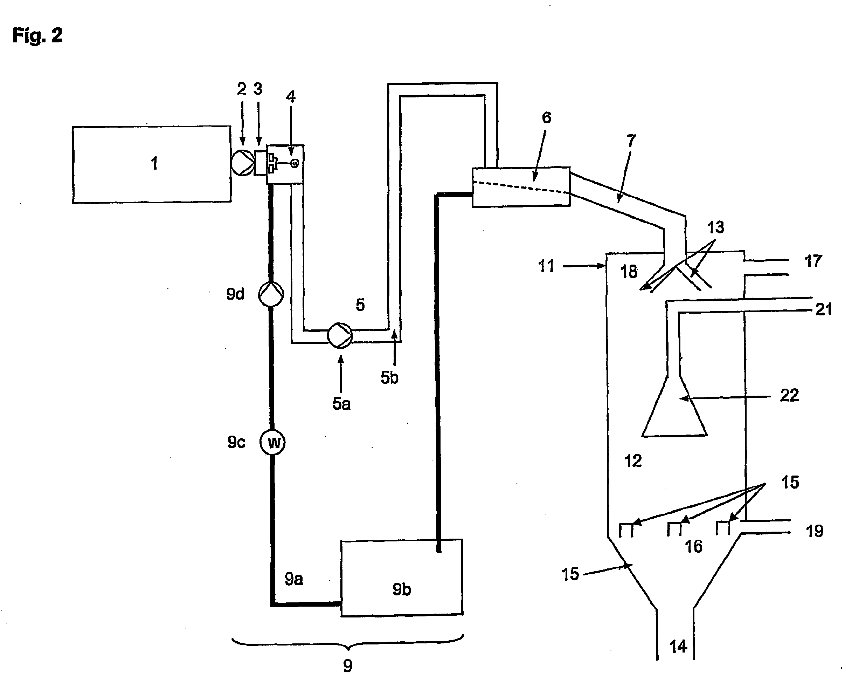

Figur 2 zeigt eine weitere Ausführung der vorliegenden Erfindung, jedoch mit dem Unterschied, dass eine Unterwassergranulation und nicht eine Stranggranulation verwendet wird, wobei die Polykondensatstränge direkt am Düsenaustritt mittels einer Unterwasserschneidvorrichtung (4) geschnitten werden. Als weitere Unterschiede sind zwei Einfüllöffnungen für Granulate (13) in dem Behandlungsraum (12) dargestellt. Die Behandlungsgaszufuhr erfolgt einerseits durch eine Zuführöffnung (19) in eine Zuführeinrichtung für Behandlungsgas (15), hier eine Vielzahl an Einlasskanälen, in den Bodenbereich des Behandlungsraums (16). Andererseits erfolgt die Behandlungsgaszufuhr durch eine weitere Zuführöffnung (21) in eine weitere Zuführeinrichtung für Behandlungsgas (22), hier ein nach unten offener, umgekehrter Konus, in einen Bereich oberhalb des Bodenbereiches (16) des Behandlungsraums (12).

Dadurch wird der Behandlungsraum (12) in zwei Zonen geteilt, wobei die Gasmenge in beiden Bereichen über dem Lockerungspunkt der Granulatschüttung liegt. Im oberen Bereich entsteht jedoch eine stärkere Verwirbelung und Rückmischung, was zu einer raschen Temperaturangleichung zwischen Granulat und Behandlungsgas führt. Im unteren Bereich liegt dann wieder eine Behandlungszone mit engem Verweilzeitspektrum vor.

Die Vorteile des erfindungsgemässen Prozesses werden in einem beispielhaften Anwendungsfall verdeutlicht, wobei die Verweilzeit zur Herstellung homogener, agglomeratfreier Granulate unter denjenigen konventioneller Prozesse liegt.

### Beispiel 1

Ein Polyethylenterephthalat-Copolymer mit 2mol-% IPA-Modifikation und einem IV-Wert von 0.6 dl/g wurde in einem Versuchsaufbau gemäss Figur 2 verarbeitet, wobei die Schmelzeherstellung in einem Zweiwellenextruder erfolgt ist und keine Pumpe (5a) eingesetzt wurde. Der Durchsatz betrug 200 kg/h, die Schmelzetemperatur am Düsenaustritt lag bei 290°C. Durch Unterwassergranulation erfolgte eine Granulierung zu einem Granulatgewicht von 18 mg. Als flüssiges Kühlmedium wurde Wasser bei 90°C verwendet. Beim Eintritt in den Behandlungsraum betrug die mittlere Granulattemperatur ca. 140°C. Der Behandlungsraum war durch die zwei Gaseintrittsvorrichtungen in zwei Zonen aufgeteilt, wobei in der unteren Zone Luft mit 170°C zugeführt wurde, so dass sich eine Gasgeschwindigkeit (Leerrohrgeschwindigkeit) von ca. 1 m/sec ergeben hat, und in der oberen Zone zusätzliche Luft mit 180°C zugeführt wurde, so dass sich eine Gasgeschwindigkeit von ca. 2 m/sec ergeben hat. In der oberen Zone ergab sich eine starke Verwirbelung über eine Betthöhe von 30 cm mit einer Verweilzeit von ca. 2 Minuten. In der unteren Zone ergab sich ein bewegtes Festbett mit 90 mm/min Sinkgeschwindigkeit über eine Betthöhe von 100 cm mit einer Verweilzeit von ca. 9 Minuten. Durch Zugabe von farbigen PET-Granulaten ergab sich ein Verweilzeitspektrum von 4 bis 25 Minuten, wobei keine Granulate mit weniger als 4 Minuten Verweilzeit ausgetreten sind. Die Austrittstemperatur der Granulate betrug 175°C. Die Granulate waren vollständig weiss ohne einen Anteil an amorphen (klaren) Granulaten aufzuweisen. Die DSC-Schmelzwärme betrug 41,8 J/g, was 36% Kristallinität entspricht. Es bildeten sich keine Klumpen oder Agglomerate.

### Bezugszeichen

- 1: Reaktor
- 2: Fördervorrichtung für Polykondensatschmelze
- 3: Düse
- 4: Schneidvorrichtung (Granulator)
- 5: Fördervorrichtung zum Transport der Polykondensatgranulate in einem flüssigen Kühlmedium
- 6: Trennvorrichtung zur Trennung der Polykondensatgranulate von dem flüssigen Kühlmedium
- 7: Fördervorrichtung für Polykondensatgranulat
- 8: Kühlvorrichtung zum Kühlen der Polykondensatstränge
- 9: Rückführsystem für flüssiges Kühlmedium
- 11: Gehäusemantel
- 12: Behandlungsraum
- 13: Einfüllöffnung für Granulat
- 14: Austragsöffnung für Granulat
- 15: Zuführeinrichtung für Behandlungsgas
- 16: Bodenbereich des Behandlungsraums
- 17: Wegführeinrichtung für Behandlungsgas
- 18: Deckenbereich des Behandlungsraums
- 19: Zuführöffnung für Behandlungsgas
- 20: Verteilerraum für Gaseinlass
- 21: weitere Zuführöffnung
- 22: weitere Zuführeinrichtung für Behandlungsgas

## Patentansprüche

1. Verfahren zur kontinuierlichen Herstellung eines teilkristallinen Polykondensatgranulates, welches die folgenden Schritte aufweist:
- Herstellen einer Polykondensatschmelze;
- Formen von Polykondensatgranulaten und Verfestigen der Polykondensatschmelze in einem flüssigen Kühlmedium, wobei das Formen der Granulate vor oder nach dem Verfestigen erfolgen kann;
- Trennen der Granulate von dem flüssigen Kühlmedium, sobald die Abkühlung der Polykondensatgranulate auf eine durchschnittliche Temperatur, die innerhalb des Kristallisationstemperaturbereiches des Polykondensates liegt, erfolgt ist;
- Kristallisieren der Granulate in einem Behandlungsraum, wobei im Behandlungsraum das Behandlungsgas im Gegenstrom zu den Polykondensatgranulaten geführt wird,
**dadurch gekennzeichnet, dass**
die Strömungsgeschwindigkeit des Behandlungsgases über dem Lockerungspunkt des Polykondensatgranulates liegt, das Polykondensatgranulat im Behandlungsraum ein enges Verweilzeitspektrum aufweist, und dass zumindest 95% des Polykondensatgranulates im Behandlungsraum eine minimale Verweilzeit von mehr als 20% der mittleren Verweilzeit aufweisen.

2. Verfahren gemäss Anspruch 1, **dadurch gekennzeichnet, dass** Behandlungsgas mit einer Temperatur zugeführt wird, die über der mittleren Eintrittstemperatur der Polykondensatgranulate in den Behandlungsraum liegt.

3. Verfahren gemäss einem der vorhergehenden Ansprüche, **dadurch gekennzeichnet, dass** das flüssige Kühlmedium zumindest teilweise im Kreislauf geführt und erhitzt werden kann.

4. Verfahren gemäss einem der vorhergehenden Ansprüche, **dadurch gekennzeichnet, dass** es sich bei dem Polykondensat um Polyamid, Polykarbonat, Polyhydroxyalkanoat, Polylaktid oder Polyester und ihre Copolymere und/oder ihre Mischungen handelt.

5. Verfahren gemäss Anspruch 4, **dadurch gekennzeichnet, dass** es sich bei dem Polyester um Polyethylenterephthalat (PET), Polybutylenterphthalat (PBT) oder Polyethylennaphthalat (PEN) handelt.

6. Verfahren gemäss einem der vorhergehenden Ansprüche, **dadurch gekennzeichnet, dass** die Sinkgeschwindigkeit der Polykondensatgranulate im Behandlungsraum grösser als 0.05 m/min ist.

7. Verfahren gemäss einem der vorhergehenden Ansprüche, **dadurch gekennzeichnet, dass** die Sinkgeschwindigkeit der Polykondensatgranulate im Behandlungsraum grösser als 0.15 m/min ist.

## Claims

1. A process for the continuous production of a partially crystalline polycondensate pellet, comprising the following steps:
- production of a polycondensate melt;
- shaping of polycondensate pellets and solidification of the polycondensate melt in a liquid coolant; wherein the pellets can be shaped prior to or after the solidification process;
- separation of the pellets from the liquid coolant, as soon as the cooling of the polycondensate pellets has taken place to an average temperature which is within the crystallization temperature range of the polycondensate;
- crystallization of the pellets in a treatment space, wherein the treatment gas in the treatment space is conducted in counter-current with respect to the polycondensate pellets,
**characterized in that**
the flow rate of the treatment gas is above the fluidization point of the polycondensate pellets, the polycondensate granulate in the treatment space exhibits a narrow residence time spectrum, and that at least 95% of the polycondensate pellets in the treatment space have a minimum residence time of more than 20% of the average residence time.

2. The process according to claim 1, **characterized in that** treatment gas is introduced at a temperature which is above the average temperature at which the polycondensate pellets enter the treatment space.

3. The process according to any of the preceding claims, **characterized in that** the liquid coolant can be at least to some extent circulated and heated.

4. The process according to any of the preceding claims, **characterized in that** the polycondensate is polyamide, polycarbonate, polyhydroxyalkanoate, polylactide, or polyester, or a copolymer thereof and/or a mixture thereof.

5. The process according to claim 4, **characterized in that** the polyester is polyethylene terephthalate (PET), polybutylene terephthalate (PBT) or polyethylene naphthalate (PEN).

6. The process according to any of the preceding claims, **characterized in that** the settling rate of the polycondensate pellets in the treatment space is more than 0.05 m/min.

7. The process according to any of the preceding claims, **characterized in that** the settling rate of the polycondensate pellets in the treatment space is more than 0.15 m/min.

## Revendications

1. Procédé pour la préparation continue d'un granulat d'un polycondensat partiellement cristallin, présentant les étapes suivantes :
- préparation d'une masse fondue de polycondensat ;
- façonnage de granulats de polycondensat et solidification de la masse fondue de polycondensat dans un agent de refroidissement liquide, le façonnage des granulats pouvant avoir lieu avant ou après la solidification ;
- séparation des granulats du milieu de refroidissement liquide, dès que le refroidissement des granulats de polycondensat à une température moyenne située dans la plage de température de cristallisation du polycondensat a eu lieu ;
- cristallisation des granulats dans un espace de traitement, le gaz de traitement étant guidé à contre-courant par rapport aux granulats de polycondensat dans l'espace de traitement,
**caractérisé en ce que** la vitesse d'écoulement du gaz de traitement se situe au-dessus du point de fluidisation du granulat de polycondensat, le granulat de polycondensat présente un spectre de temps de séjour étroit dans l'espace de traitement et au moins 95% du granulat de polycondensat présentent un temps de séjour minimal dans l'espace de traitement supérieur à 20% du temps de séjour moyen.

2. Procédé selon la revendication 1, **caractérisé en ce que** le gaz de traitement est alimenté à une température qui est supérieure à la température d'entrée moyenne des granulats de polycondensat dans l'espace de traitement.

3. Procédé selon l'une quelconque des revendications précédentes, **caractérisé en ce que** l'agent de refroidissement liquide peut être guidé au moins partiellement en circulation et chauffé.

4. Procédé selon l'une quelconque des revendications précédentes, **caractérisé en ce qu'**il s'agit, pour le polycondensat, de polyamide, de polycarbonate, de polyhydroxyalcanoate, de polylactide ou de polyester et de leurs copolymères et/ou de leurs mélanges.

5. Procédé selon la revendication 4, **caractérisé en ce qu'**il s'agit, pour le polyester, de poly(téréphtalate d'éthylène) (PET), de poly(téréphtalate de butylène) (PBT) ou de poly(naphtalate d'éthylène) (PEN).

6. Procédé selon l'une quelconque des revendications précédentes, **caractérisé en ce que** la vitesse de décantation des granulats de polycondensat dans l'espace de traitement est supérieure à 0,05 m/min.

7. Procédé selon l'une quelconque des revendications précédentes, **caractérisé en ce que** la vitesse de décantation des granulats de polycondensat dans l'espace de traitement est supérieure à 0,15 m/min.
